(19) Europäisches Patentamt / European Patent Office / Office européen des brevets

(11) **EP 2 894 072 A1**

(12) **EUROPEAN PATENT APPLICATION**
published in accordance with Art. 153(4) EPC

(43) Date of publication:
**15.07.2015 Bulletin 2015/29**

(21) Application number: **12884172.3**

(22) Date of filing: **07.09.2012**

(51) Int Cl.:
*B60W 30/16* (2012.01)    *B60W 40/04* (2006.01)
*G01S 13/93* (2006.01)    *G01S 17/93* (2006.01)
*G08G 1/16* (2006.01)

(86) International application number:
**PCT/JP2012/072975**

(87) International publication number:
**WO 2014/038076 (13.03.2014 Gazette 2014/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **TOYOTA JIDOSHA KABUSHIKI KAISHA**
**Toyota-shi, Aichi-ken, 471-8571 (JP)**

(72) Inventor: **NAKADORI, Minoru**
**Toyota-shi**
**Aichi 471-8571 (JP)**

(74) Representative: **TBK**
**Bavariaring 4-6**
**80336 München (DE)**

(54) **VEHICLE DISTANCE CONTROL DEVICE**

(57)    An inter-vehicle distance control apparatus configured to detect a preceding vehicle in front of a vehicle having the inter-vehicle distance control apparatus installed, and to control an inter-vehicle distance between the preceding vehicle and the vehicle, includes a distance obtainment unit configured to set one or more reflecting parts of the preceding vehicle as target objects, and to obtain distances between the respective target objects and the vehicle; a target object identification unit configured to identify a least-distant target object having a least distance among the distances; a difference value recording unit configured to record a difference between the distance to the least-distant target object identified by the target object identification unit, and the distance to each of the other target objects; and a distance correction unit configured to correct the distance between a currently least-distant target object and the vehicle, by subtracting the difference recorded in the past for the least-distant target object, from the distance of the currently least-distant target object, when getting close within a predetermined distance to the least-distant target identified as having the least distance by the target object identification unit, before the target object identification unit identifies the currently least-distant target object.

FIG.1

CORRECTED POSITION OF CABIN
(DISTANCE TO CABIN)

**Description**

[Technical Field]

The present invention relates to an inter-vehicle distance control apparatus that detects a preceding vehicle in front of a vehicle having the inter-vehicle distance control apparatus installed to control the inter-vehicle distance between the preceding vehicle and the vehicle.

[Background Art]

An inter-vehicle distance control apparatus has been known that detects the inter-vehicle distance to a preceding vehicle to automatically control the inter-vehicle distance and speed depending on the vehicle speed. As an inter-vehicle distance sensor to detect the inter-vehicle distance, there are cases where a radar device is used. The radar device receives a reflected wave reflected by a preceding vehicle or the like, which has been transmitted by the radar, and calculates the inter-vehicle distance, relative speed, and lateral position with respect to a target object. Therefore, in a state where it is difficult for the radar to capture the preceding vehicle, there are cases where the preceding vehicle cannot be captured even if the preceding vehicle actually exists.

In this case, the inter-vehicle distance control apparatus transitions to traveling at constant speed set for the vehicle beforehand, or newly treats a vehicle ahead of the preceding vehicle traveling further in front as the preceding vehicle to follow, and starts traveling while following the preceding vehicle. Therefore, if the real preceding vehicle actually exists, there is a risk in that the inter-vehicle distance to the real preceding vehicle becomes too short. For such inconvenience, one may consider to release automatic vehicle speed control (see, for example, Patent Document 1).

However, as described in Patent Document 1, there is a problem in that if the automatic vehicle speed control is released when the preceding vehicle cannot be captured, the driver needs to perform an operation to restart the automatic vehicle speed control again, which reduces the operability.

[Patent Document 1] Japanese Laid-open Patent Publication No. 2002-283874

[Summary of the Invention]

[Problem to be Solved by Invention]

In view of the above, it is an object of at least one embodiment of the present invention to provide an inter-vehicle distance control apparatus that avoids having a shortened inter-vehicle distance to a preceding vehicle when the preceding vehicle cannot be captured, without releasing automatic vehicle speed control.

[Means to Solve the Problem]

According to at least one embodiment of the present invention, an inter-vehicle distance control apparatus configured to detect a preceding vehicle in front of a vehicle having the inter-vehicle distance control apparatus installed, and to control an inter-vehicle distance between the preceding vehicle and the vehicle, includes a distance obtainment unit configured to set one or more reflecting parts of the preceding vehicle as target objects, and to obtain distances between the respective target objects and the vehicle; a target object identification unit configured to identify a least-distant target object having a least distance among the distances; a difference value recording unit configured to record a difference between the distance to the least-distant target object identified by the target object identification unit, and the distance to each of the other target objects; and a distance correction unit configured to correct the distance between a currently least-distant target object and the vehicle, by subtracting the difference recorded in the past for the least-distant target object, from the distance of the currently least-distant target object, when getting close within a predetermined distance to the least-distant target identified as having the least distance by the target object identification unit, before the target object identification unit identifies the currently least-distant target object.

[Advantage of the Invention]

According to at least one embodiment of the present invention, it is possible to provide an inter-vehicle distance control apparatus that avoids having a shortened inter-vehicle distance to a preceding vehicle when the preceding vehicle cannot be captured, without releasing automatic vehicle speed control.

[Brief Description of Drawings]

FIG. 1 is an example of diagrams illustrating an overview of an inter-vehicle distance control apparatus according to an embodiment of the present invention;
FIG. 2 is an example of a diagram illustrating a configuration of an in-vehicle device;
FIG. 3 is an example of a diagram schematically illustrating general steps to determine an acceleration command value executed by an inter-vehicle control ECU;
FIG. 4 is an example of diagrams schematically illustrating an acceleration gradient limit;
FIG. 5 is an example of a functional block diagram of an inter-vehicle control ECU;
FIG. 6 is an example of diagrams illustrating an offset value;
FIG. 7 is an example of diagrams illustrating several cases of the same target;
FIG. 8 is an example of diagrams schematically illustrating target object information recorded in a target object information DB;
FIG. 9 is an example of a flowchart illustrating steps of inter-vehicle control executed by an inter-vehicle control ECU;
FIG. 10 is an example of diagrams illustrating general features of an inter-vehicle distance control apparatus (a second embodiment);
FIG. 11 is an example of a functional block diagram of an inter-vehicle control ECU (the second embodiment);
FIG. 12 is schematically illustrating target object information recorded in a target object information DB;
FIG. 13 is an example of a flowchart illustrating steps of inter-vehicle control executed by an inter-vehicle control ECU (the second embodiment);
FIG. 14 is an example of diagrams illustrating inconvenience of traveling while following a cabin as a target object;
FIG. 15 is an example of a functional block diagram of an inter-vehicle control ECU (a third embodiment);
FIG. 16 is an example of a flowchart illustrating steps of inter-vehicle control executed by an inter-vehicle control ECU (the third embodiment);
FIG. 17 is an example of a functional block diagram of an inter-vehicle control ECU (a

fourth embodiment); and

FIG. 18 is an example of a flowchart illustrating steps of inter-vehicle control executed by an inter-vehicle control ECU (the fourth embodiment).

[Description of Reference Symbols]

| 11 | radar device |
| 12 | inter-vehicle control ECU |
| 13 | engine ECU |
| 14 | skid control ECU |
| 15 | ACC switch |
| 16 | transmission |
| 17 | throttle motor |
| 20 | brake ACT |
| 100 | inter-vehicle distance control apparatus |

[Mode for Carrying Out the Invention]

In the following, embodiments of the present invention will be described with reference to the drawings. However, the technological scope of the present invention is not limited to the embodiments.

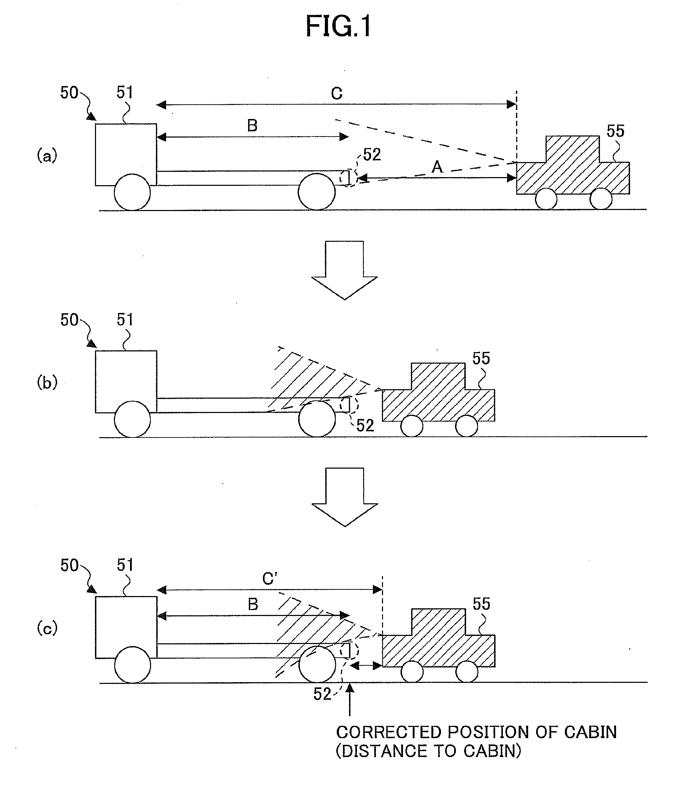

FIG. 1 is an example of diagrams illustrating an overview of an inter-vehicle distance control apparatus according to an embodiment of the present invention. The inter-vehicle distance control apparatus has, for example, functions of full speed range ACC (Adaptive Cruise Control) installed. The full speed range ACC is also called a "full speed range, constant speed traveling, inter-vehicle distance control apparatus", which includes the following functions.

A. Detect a preceding vehicle by a radar or the like. If a preceding vehicle is detected, control the distance to the preceding vehicle being detected by the radar to be a target inter-vehicle distance depending on the vehicle speed to travel while following the preceding vehicle.

B. If the preceding vehicle goes out of detection, travel at constant speed set by the driver.

C. If the preceding vehicle stops, stop the vehicle while maintaining a proper inter-vehicle distance.

D. If the preceding vehicle restarts traveling, restart traveling while maintaining the proper inter-vehicle distance depending on the vehicle speed to follow the preceding vehicle.

In this way, by having the inter-vehicle distance controlled in a full speed range (especially in a low speed range), the driver can be released from frequent start and stop operations in traffic congestion, and the drive load can be reduced. Note that a "full speed range" covers a range including zero or a very low speed up to a predetermined high speed (for example, a legal limit or an upper limit set by the driver). Also, although "inter-vehicle distance control" does not mean exactly the same as "traveling while following", they may be used interchangeably in the present embodiment.

On the other hand, although the inter-vehicle distance control apparatus can execute inter-vehicle distance control at a low speed range before and after starting and stopping, for example, capturing a preceding vehicle may be difficult at the low speed range.

As illustrated in FIG. 1(a), a vehicle 55 captures a rear end part 52 of a car carrier 50 in front by the radar, and travels while maintaining a distance A depending on the vehicle speed to follow the car carrier 50. When the car carrier 50 decelerates, the inter-vehicle distance control apparatus shortens the inter-vehicle distance while decelerating the vehicle 55. However, as illustrated in FIG. 1(b), an irradiation angle of the radar device 11 in the vertical direction is limited within a predetermined range. Therefore, when the preceding vehicle has a special shape as shown, its rear end part 52 may not be detected by the radar.

In this case, the inter-vehicle distance control apparatus detects a cabin 51 of the car carrier 50 by the radar. Then, when the car carrier 50 restarts traveling, the inter-vehicle distance control apparatus restarts traveling while maintaining the target distance A to the cabin 51, which makes the vehicle 55 get too close to the rear end part 52 of the car carrier 50.

Thereupon, the inter-vehicle distance control apparatus in the present embodiment controls as follows.

(i) First, as in FIG. 1(a), when the rear end part 52 and the cabin 51 of the car carrier 50 are detected, a difference B (referred to as an "offset", which will be described later) between the distance A to the rear end part 52 of the car carrier 50 and a distance C to the cabin 51, is stored for later use.

(ii) Then, when the rear end part 52 of the car carrier 50 goes out of detection, the inter-vehicle distance control apparatus sets a corrected position of the cabin 51, as illustrated in FIG. 1(c), by subtracting the difference B from a distance C' to the cabin 51.

Namely, the cabin 51 is considered as detected at a position having the distance of C'-B viewed from the vehicle 55, and the inter-vehicle distance control apparatus continues the inter-vehicle distance control to maintain a target inter-vehicle distance having this corrected position as a reference of the inter-vehicle distance. The corrected position of the cabin 51 is virtually the same as the position of the rear end part 52, and the vehicle 55 can travel while following the car carrier 50 without getting too close to it.

In this way, the inter-vehicle distance control apparatus can control the inter-vehicle distance without getting too close to the most rear end part of a preceding vehicle even if the rear part of the preceding vehicle has concavities and convexities with which a part detected by the radar varies depending on the distance to the preceding vehicle.

Note that although the example in FIG. 1 is described for a low speed range, the inter-vehicle distance control apparatus can execute the inter-vehicle distance control for a full speed range. For example, if the inter-vehicle distance becomes shorter when the driver of the vehicle 55 steps on the accelerator pedal to accelerate, the vehicle speed goes over the low speed range, but the inter-vehicle distance control can be executed based on a corrected position of the preceding vehicle.

[First embodiment]

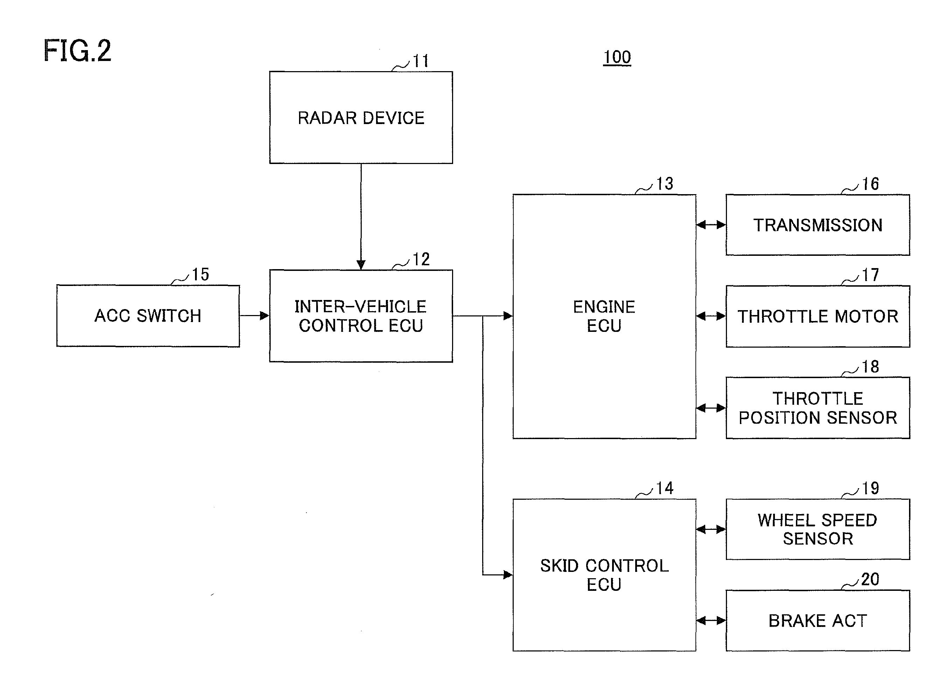

FIG. 2 is an example of a diagram illustrating a configuration of in-vehicle devices included in an inter-vehicle distance control apparatus 100. The inter-vehicle distance control apparatus 100 is implemented by mainly having an inter-vehicle control ECU (Electronic Control Unit) 12 cooperate with the radar device 11, an engine ECU, and a skid control ECU 14. The radar device 11, inter-vehicle control ECU 12, engine ECU 13, and skid control ECU 14 are connected with each other via an in-vehicle network such as a CAN (Controller Area Network). The inter-vehicle control ECU 12 is connected with the ACC switch 15, the engine ECU 13 is connected with a transmission 16, a throttle motor 17 and a throttle position sensor 18, and the skid control ECU 14 is connected with a wheel speed sensor 19 and a brake ACT (actuator) 20, via special-purpose lines such as those for serial communication.

The radar device 11, inter-vehicle control ECU 12, engine ECU 13, and skid control ECU 14 are information processing apparatuses, respectively, that have microcomputers, electric power sources, and wire harness interfaces built in. Also, the microcomputer has a publicly known configuration that includes a CPU, a ROM, a RAM, I/Os, and a CAN communication device. The CPU loads a program stored in the ROM to the RAM to execute the program, receives signals from sensors via the I/Os, and controls the actuators. Also, the CAN communication device transmits and receives required data with the other ECUs via the CAN. Note that these functional segments are just an example, and the ECUs do not have specific restrictions to have which of these functions.

The radar device 11 is an example of a distance detection unit to detect the distance to a preceding vehicle, and detects the distance, relative speed, and lateral position for each target object to provide those for the inter-vehicle distance control ECU. As a distance detection sensor, a camera or a stereo camera may be adopted. Similar information can be obtained by a camera or a stereo camera. Since a radar and a camera have different detection ranges and precision for a target object, it is effective to have both built-in to adopt distance detection by sensor fusion, with which the detection ranges and precision can be complemented with each other. Configured in this way, distance information or a lateral position at a short distance not suited to the radar device 11 can be complemented by the stereo camera, and distance information at a middle to long distance not suited to the stereo camera can be complemented by the radar device 11.

The radar device 11 is a radar device that mainly uses a high-frequency signal in a millimeter wave band as a transmission wave, and adopts a transmission method of the transmission wave such an FMCW (Frequency-modulated continuous-wave) method or a pulse radar method. These methods are publicly known, and any of these may be used for the radar device 11 in the present embodiment.

The pulse radar is a method that transmits a transmission wave while changing the transmission direction of the transmission wave in a predetermined range, to obtain the direction of a target object from the transmission direction when a reflected wave is received.

The FMCW method will be briefly described. The radar device 11 transmits a transmission wave in a predetermined range in front while controlling the transmission wave to have a linearly rising interval for a predetermined ratio in terms of time, followed by a linearly falling interval for the predetermined ratio. The radio wave reflected by a target object in front of the vehicle is received by the antenna, and then, mixed with the transmission wave to make a beat signal. Here, the following relationship is satisfied where fb1 represents the beat frequency of a rise interval, fb2 represents the beat frequency of a fall interval, fr represents a beat frequency when the relative speed is zero, and fd represents a Doppler frequency (increased or decreased amount) when the relative speed is not zero.

$$fr=(fb1+fb2)/2$$

$$fd=(fb2-fb1)/2$$

Also, since the slopes of the rising and falling frequencies are known, fr and the distance to the target object have a certain relationship, with which the distance to the target object can be obtained once fb1 and fb2 are known.

Also, since the Doppler frequency corresponding to a changed amount between the transmission wave and the reception wave is caused by the Doppler effect, the relative speed and fd have a certain relationship, with which the relative speed can be obtained once fb1 and fb2 are known. Here, the relative speed is defined by "(the speed of the vehicle) - (the speed of the preceding vehicle)", which is positive when the inter-vehicle distance becomes shorter, or negative when the inter-vehicle distance becomes longer.

To extract the beat frequencies fb1 and fb2 from a beat signal, for example, a Fourier transform is applied with a DSP (Digital Signal Processor), to analyze which frequency band includes main components. At the beat frequency of the beat signal, power (electric power) takes a peak. Therefore, a frequency at which a peak is taken (greater than or equal to a predetermined threshold) is determined as the beat frequency. The target object is detected with this peak. The radar device 11 determines the beat frequency fb1 from a peak in the rise interval, and the beat frequency fb2 from a peak in the fall interval fall interval. In this way, the distance and relative speed of the target object can be obtained. Note that if multiple target objects exist in the transmission range of the radar, multiple peaks are obtained.

If the radar device 11 has multiple reception antennas, and the target object exists in a direction other than the front direction, the direction (lateral position) of the target object is obtained by using phase differences of beat signals received by multiple reception antennas. First, phases of the beat frequency are obtained by the Fourier transform. When the target object is not in the front direction, a path difference is generated between two reception antennas, which is determined by the interval and directions of the two reception antennas. Therefore, by treating the interval of the reception antennas, the wavelength of the radio wave and the like as constants, and using a relationship between the phase difference and the path difference, the direction can be calculated from the path difference and the phase difference of the beat signals at the two reception antennas. Such a method of obtaining the direction is called a mono-pulse method.

Also, the direction can be obtained by DBF (Digital Beam Forming) that implements phased array antennas by signal processing. For example, by advancing (delaying) one of beat signals having a phase difference at two reception antennas just by the phase difference, the beat signals received at the two reception antennas can have the same phase. In this case, the signal strength becomes a maximal. Therefore, by obtaining the sum of the signal strengths while changing the shift amounts of the beat signals received at the multiple reception antennas, the target object can be estimated to be in the direction that corresponds to the shift amounts where the sum of the signal strengths becomes the maximal.

Other methods of obtaining the direction include a MUSIC (Multiple Signal Classification) analysis and a Capon analysis, and the present embodiment has no restrictions to use any of these detection methods.

For each scan that consists of a rise and a fall of the transmission wave, the radar device 11 transmits the distance, relative speed, and direction of the target object (referred to as "three pieces of the target object information" below) to the inter-vehicle control ECU 12. If there are multiple target objects, the radar device 11 transmits the target object information for each of the target objects.

Based on the target object information, current vehicle speed, and acceleration transmitted from the radar device 11, the inter-vehicle control ECU 12 transmits an acceleration command value (required driving force) or a brake request to the other ECUs. Details will be described later.

The ACC switch 15 receives an operation of the driver for the full speed range ACC, and indicates the operation to the inter-vehicle control ECU 12. For example, the following operations can be made.

(i) Turning the full speed range ACC ON and OFF
(ii) Switching between an inter-vehicle distance control mode and a constant speed control mode
(iii) Setting the vehicle speed for constant speed traveling
(iv) Setting the inter-vehicle distance (for example, selected from three types of long/middle/short, for each of which the inter-vehicle distance is determined depending on the vehicle speed)

In the present embodiment, the vehicle is assumed to operate under the inter-vehicle distance control mode, and if a preceding vehicle is not detected, the inter-vehicle distance control mode is kept while the vehicle travels at a constant speed.

The engine ECU 13 monitors a throttle opening detected by the throttle position sensor 18 to control the throttle motor 17. For example, based on a LUT (Look Up Table) in which a vehicle speed and an acceleration command value are associated with a throttle opening, the engine ECU 13 determines the throttle opening depending on the acceleration command value and current vehicle speed received from the inter-vehicle control ECU 12. Also, the engine ECU 13 determines whether the transmission stage needs to be switched based on a shift-up line and a shift-down line determined for the vehicle speed and throttle opening, and if necessary, issues a command for a shift to the transmission 16. The transmission 16 may be an AT (automatic transmission), a CVT (Continuously Variable Transmission), or any other mechanism.

The skid control ECU 14 applies the brake to the vehicle by controlling the opening of the valve of the brake ACT 20. The brake ACT 20 controls acceleration (deceleration) of the vehicle by having wheel cylinder pressure increased, maintained, or decreased for each wheel, which is generated by an operational fluid having pressure applied by a pump. The skid control ECU 14 applies the brake to the vehicle in response to an acceleration command value transmitted by the inter-vehicle control ECU 12.

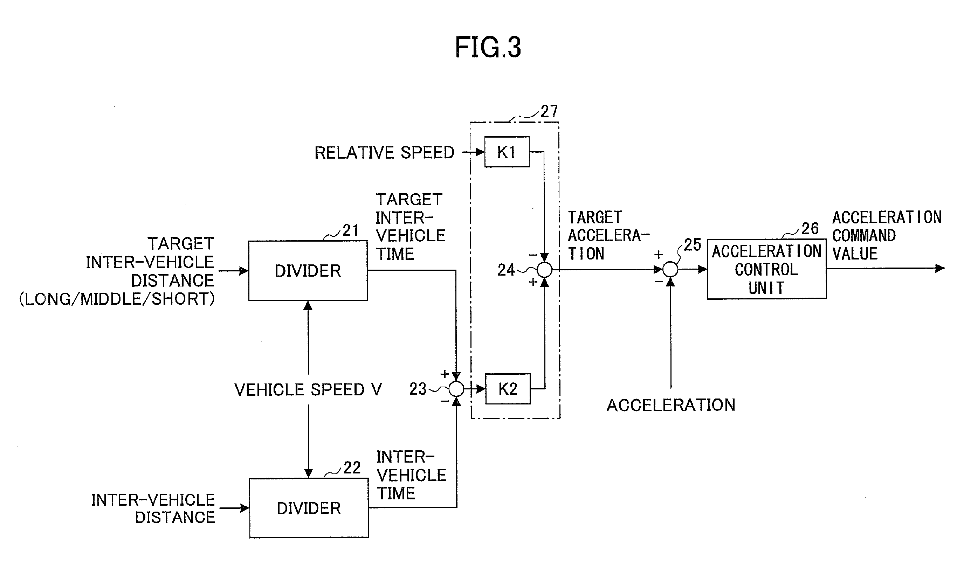

FIG. 3 is an example of a diagram schematically illustrating general steps to determine an acceleration command value executed by the inter-vehicle control ECU 12. Control input includes relative speed, an inter-vehicle distance to a target object identified as a preceding vehicle, a target inter-vehicle distance (long/middle/short), (current) speed of the vehicle, and current acceleration. The target inter-vehicle distance is uniquely determined by the current vehicle speed and one of the long/middle/short distances set by the driver.

A divider 21 calculates a target inter-vehicle time by dividing the target inter-vehicle distance by the vehicle speed V. Namely, the target inter-vehicle time is time required for reaching the preceding vehicle when traveling along the target inter-vehicle distance at the current vehicle speed. Also, a divider 22 calculates an inter-vehicle time by dividing the current inter-vehicle distance by the vehicle speed V.

A subtracter 23 calculates an inter-vehicle time deviation by subtracting the inter-vehicle time from the target inter-vehicle time. If the inter-vehicle time deviation is positive, the inter-vehicle distance is greater than the target inter-vehicle distance, or if it is negative, the inter-vehicle distance is less than the target inter-vehicle distance.

The inter-vehicle time deviation and relative speed are input into a target acceleration calculation unit 27. The target acceleration calculation unit 27 multiplies the relative speed by a gain K1, multiplies the inter-vehicle time deviation by a gain K2, and executes a subtraction by a subtracter 24 to calculate the target acceleration. Note that by changing the gain K1 and K2 depending on acceleration or deceleration, or the vehicle speed, a sense of discomfort can be reduced for the driver when performing an acceleration or deceleration operation.

$$\text{target acceleration} = -K1 \times (\text{relative speed})$$
$$+ K2 \times (\text{inter-vehicle time deviation})$$

This formula represents that if the relative speed is positive, the vehicle is approaching the preceding vehicle and the vehicle needs to be decelerated, or if the inter-vehicle time deviation is positive, the inter-vehicle distance is too long, and the vehicle needs to be accelerated. Note that the target acceleration may be determined by a differential of the relative speed or a differential of the inter-vehicle time deviation instead of the relative speed and the inter-vehicle time deviation. The above determination method of the target acceleration is just an example.

A subtracter 25 calculates an acceleration deviation by subtracting the current acceleration from the target acceleration. The acceleration deviation is input into an acceleration control unit 26, and from the acceleration deviation, the acceleration control unit 26 calculates an acceleration command value to be issued to the engine ECU 13 and the skid control ECU 14 as a command. Although the acceleration control unit 26 determines the acceleration command value so that the acceleration deviation becomes zero, an acceleration gradient limit is provided for the acceleration command value to suppress steep acceleration and deceleration.

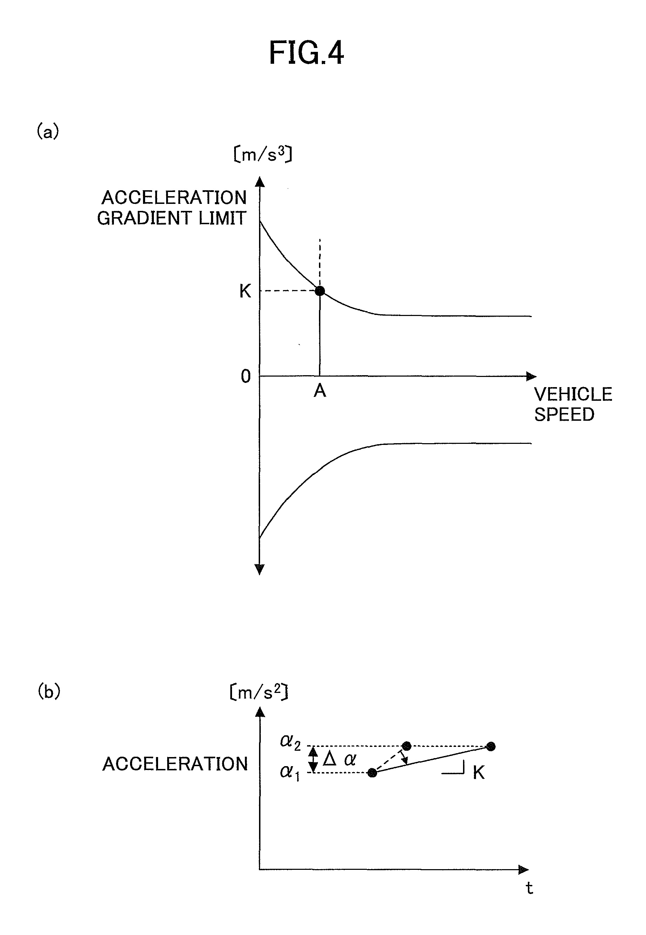

FIG. 4 is an example of diagrams schematically illustrating the acceleration gradient limit. A positive acceleration gradient limit is the acceleration gradient limit for acceleration, and a negative acceleration gradient limit is the acceleration gradient limit for deceleration. In the figure, although the positive side and the negative side have the same absolute value, they may be different. The absolute value of the acceleration gradient limit is set greater in a lower to middle speed range, and set to be less and constant in a higher speed range. The acceleration gradient limit is determined by considering to suppress a shock due to steep acceleration or deceleration; to secure a sense of acceleration in a lower speed range to a middle speed range; to accelerate while following the preceding vehicle; to secure vehicle behavior when decelerating in a high speed range; to securely decelerate in a low speed range when the preceding vehicle stops; and the like.

The inter-vehicle distance control apparatus 100 (specifically, an inter-vehicle distance control unit 36, which will be described later) determines the acceleration command value so that acceleration of the vehicle is less than or equal to the acceleration gradient limit. FIG. 4(b) is an example of a diagram illustrating a relationship between the acceleration gradient limit and the acceleration command value. Assume that the current acceleration is $\alpha_1$, the acceleration deviation is $\Delta\alpha$, acceleration to make the acceleration deviation be zero is $\alpha_2$, and the current vehicle speed is A. In this case, first, the inter-vehicle distance control apparatus 100 obtains the acceleration gradient by dividing $\Delta\alpha$ by a predetermined control cycle time $\Delta t$. If this acceleration gradient is less than or equal to the acceleration gradient limit K at the current vehicle speed A, $\alpha_1+\Delta\alpha$ is set as the acceleration command value. If the acceleration gradient is not less than or equal to the acceleration gradient limit K (in case of a slope designated by a dashed line in the figure), the inter-vehicle distance control apparatus 100 calculates the acceleration command value as follows.

$$\text{acceleration command value}$$
$$= \Delta t \times (\text{acceleration gradient limit K})$$
$$+ \text{acceleration } \alpha_1$$

This makes the acceleration not exceed the acceleration gradient limit. It is the same for deceleration.

In this way, the acceleration command value determined by the inter-vehicle control ECU 12 is transmitted to the engine ECU 13 and the skid control ECU 14. As a result, the throttle motor 17 or the brake ACT 20 is controlled, and the vehicle travels while maintaining the target inter-vehicle distance to follow the preceding vehicle. Note that operational aspects of the engine ECU 13 and the skid control ECU 14 include an aspect to increase the throttle opening; an aspect to decelerate by the engine brake and air and rolling resistance obtained by having the throttle opening fully closed; and an aspect to decelerate by having the brake ACT 20 increase the wheel cylinder pressure by having the throttle opening fully closed.

[Functions of inter-vehicle control ECU]

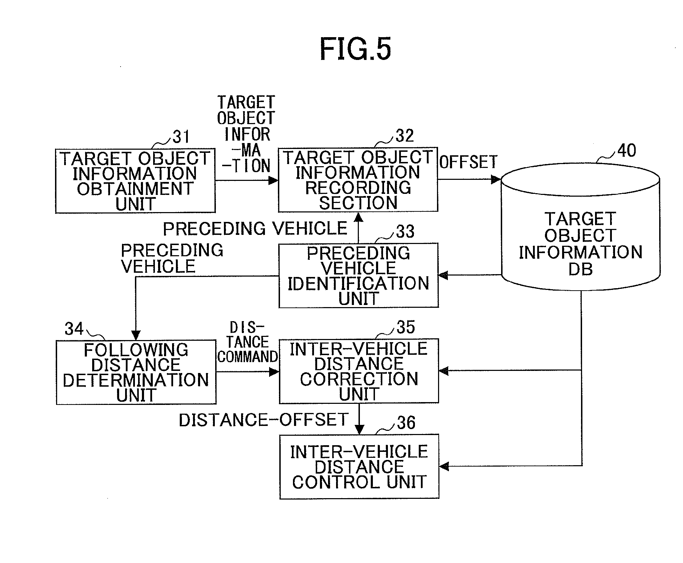

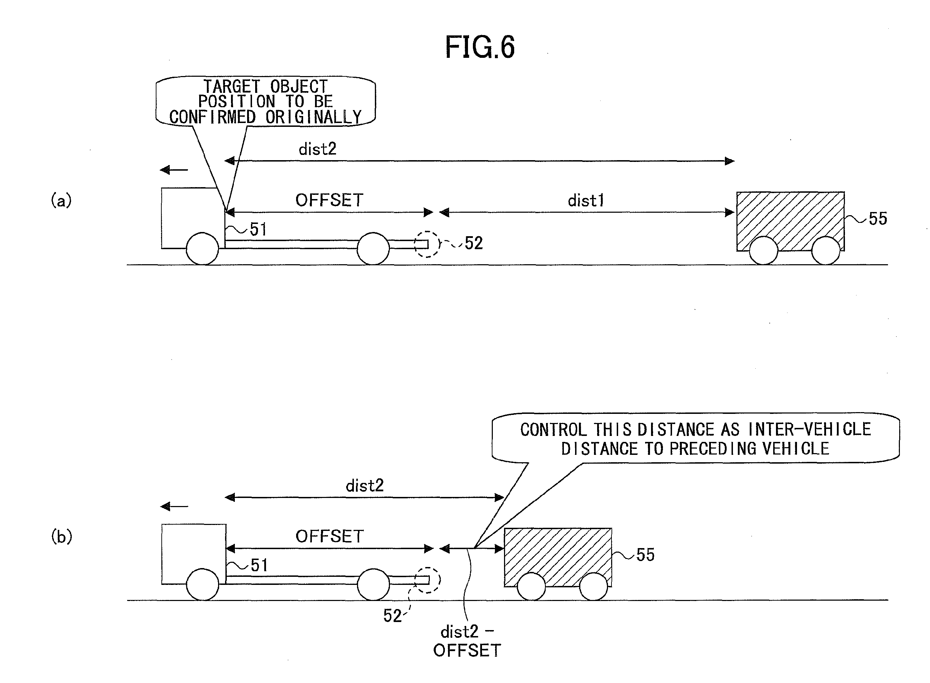

FIG. 5 is an example of a functional block diagram of the inter-vehicle control ECU 12, and FIG. 6 is an example of diagrams illustrating the offset. A target object information obtainment unit 31 obtains target object information of one or more target objects from the radar device 11. In the present embodiment, it obtains the target object information of at least two target objects. One is the target object information of the rear end part 52 as a target object, and the other is the target object information of the cabin 51 as another target object. These two target objects are different parts of the same target. Using multiple pieces of the target object information obtained from the same target to control the inter-vehicle distance when being close to the target is one of the features of the inter-vehicle distance control apparatus 100. Note that the cabin 51 here is just an example of a part other than the rear end part. A reflecting part other than the rear end part may be arbitrarily determined depending on the shape of the preceding vehicle.

The "same target" will be described. The "same target" is a target that has multiple target objects traveling at seemingly the same speed while maintaining the same distance with each other. In general, the same target is a single vehicle, although the same target may consist of multiple separable objects.

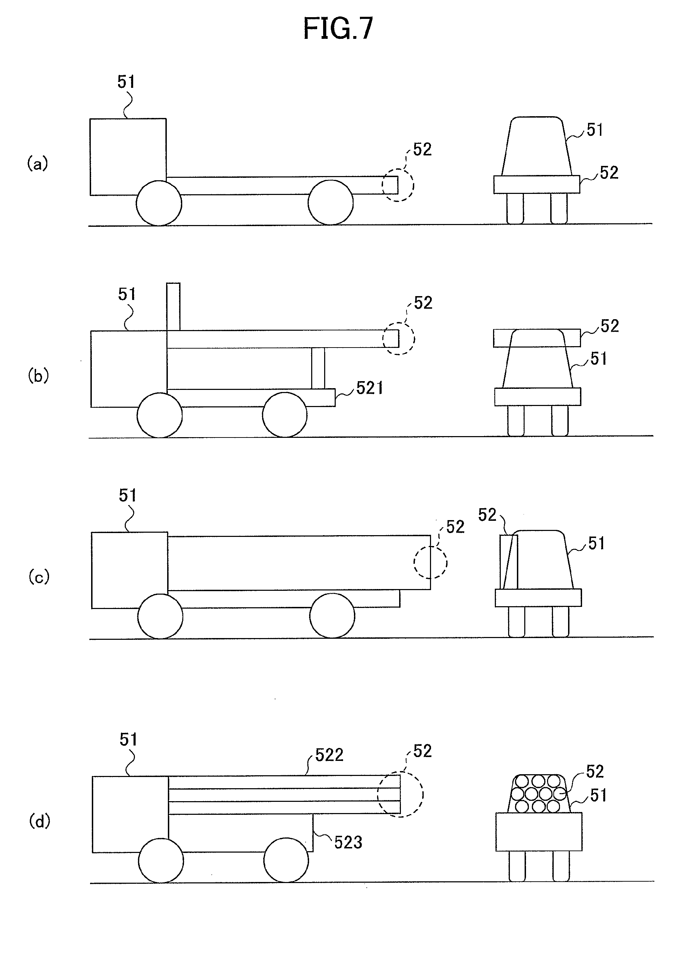

FIGs. 7(a) to (d) illustrate several cases of the same target where side views are shown on the left, and back side views are shown on the right. In FIG. 7(a), the rear end part 52 and cabin 51 of a car carrier are of the same target where the rear end part 52 of a loading platform is the part closest to a following vehicle (not shown). In FIG. 7(b), a car carrier has a two-layer loading platform, the rear end part 52 of the two-layer part and the cabin 51 are of the same target (a rear end part 521 of the loading platform may be further included) where the rear end part 52 of the two-layer part is the part closest to a following vehicle. In FIG. 7(c), the side surface part and cabin 51 of a car carrier are of the same target where the rear end part 52 of the side surface part is the part closest to a following vehicle. In FIG. 7(d), materials 522 are loaded on a car carrier. In this case, the rear end of the materials 522 and a rear end part 523 of the car carrier are of the same target because they can be viewed as travelling at the same speed while maintain the same distance to each other. In this case, the rear end part 52 of the materials is the part closest to the vehicle. As such, in the present embodiment, a preceding vehicle targeted by the inter-vehicle distance control apparatus 100 is not limited to a car carrier, but may be a vehicle whose rear shape includes parts not having the same distance from the vehicle, or a vehicle having materials loaded that have different distances to the vehicle. Therefore, the preceding vehicle may have an arbitrary name.

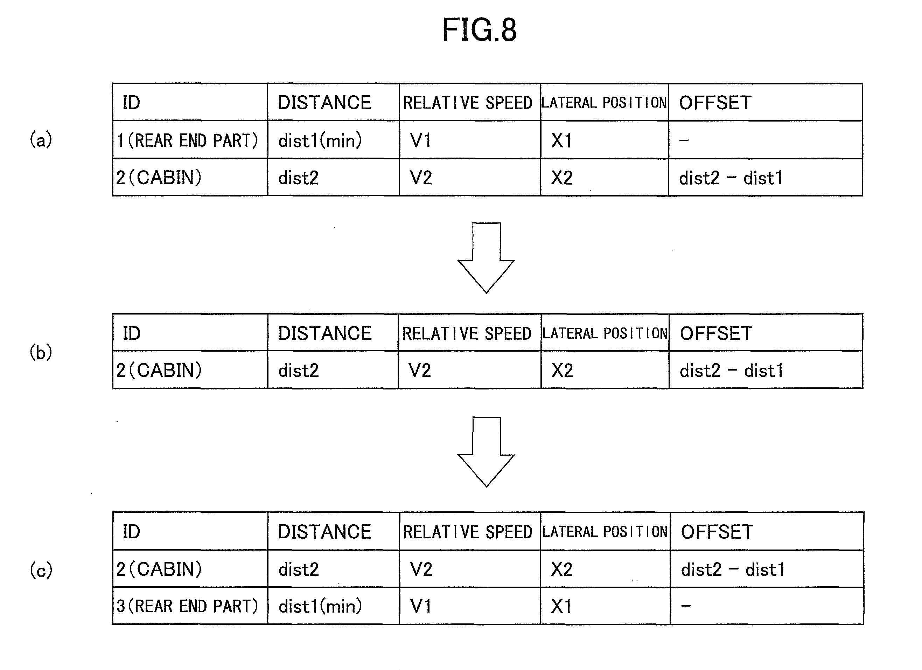

Referring to FIG. 5 again, a target object information recording section 32 records the target objects in a target object information DB 40. FIG. 8 is an example of diagrams schematically illustrating target object information recorded in the target object information DB 40. The target object information recording section 32 assigns a unique ID (identification information) to each target object, and records the "distance", "relative speed", "lateral position", and an "offset". Note that the offset is a difference between the target object having the least distance and the other target object. The target object having the least distance is indicated by a preceding vehicle identification unit. For example, if a target object having ID=1 (simply referred to as the "target object 1") has the least distance of dist1, the offset of a target object 2 is "dist2-dist1". The offset of the target object 1 is not registered. By registering the offset in this way, when the rear end part of a preceding vehicle goes out of detection, traveling can be continued while following the preceding vehicle based on a distance obtained by subtracting the offset from the distance to the other part of the preceding vehicle. As is obvious in FIG. 6(a), the offset is constant within a range of error difference regardless of dist1 or dist2.

Note that the lateral position is calculated from the direction and distance by setting the center position of the vehicle in the width direction as a reference, and for example, the right direction as positive, and the left direction as negative. The full speed range ACC makes the vehicle travel to follow the closet preceding vehicle. However, it is not necessary to follow a preceding vehicle not in the traveling lane in which the vehicle travels. Therefore, target objects to be recorded are preceding vehicles in the same traveling lane. Therefore, the target object information recording section 32 may record only target object information of target objects whose absolute values of the lateral position are within a predetermined distance. This makes it easier to select a next target object to follow when the closest preceding vehicle goes out of detection.

As the radar device 11 transmits the target object information every cycle time, the target object information recording section 32 assigns the same ID to the same target object, to record it in the target object information DB 40. For example, if a lateral position transmitted from the radar device 11 is within "the lateral position recorded in the target object information DB 40 + an amount of change possibly changed within the cycle time", the target object information recording section 32 determines that it comes from the same target object. It may be determined further with the distance, or only with the distance. The target object information recording section 32 updates the target object information of the target object having the same ID in the target object information DB 40, and recalculates the offset (the offset hardly changes).

A preceding vehicle identification unit 33 identifies a target object having the shortest distance as the preceding vehicle. Therefore, in FIG. 6(a), the rear end part of the car carrier is the target object to follow as the preceding vehicle.

Next, there are cases where the preceding vehicle decelerates due to traffic congestion, which makes dist1 and dist2 become shorter. In such a case, the radar device 11 may not be able to detect the rear end part, and if so, the target object information of the target object 1 is not updated, and eventually deleted from the target object information DB 40. Therefore, the target object information in the target object information DB 40 becomes as illustrated in FIG. 8(b).

Since the preceding vehicle identification unit 33 identifies a target object having the shortest distance as the preceding vehicle, the target object 2 is now identified as the preceding vehicle. A following distance determination unit 34 determines whether to travel while following the identified preceding vehicle by using dist2, or by using "dist2 - offset". This determination is for determining whether the target object 1 is not detected because the vehicle gets too close to the preceding vehicle. Therefore, it is sufficient to determine whether the rear end part is within a predetermined distance from the vehicle. When the distance to the rear end part, or dist1, is not detected at this moment, it is determined whether "dist2 - offset" is less than dist1 that has been detected last time. Hunting of the determination result may occur if only determining whether it is less than dist1. Therefore, to determine that it is clearly less than dist1, another condition is imposed:

$$(\text{dist2} - \text{offset}) < (\text{dist1 detected last time}) - \text{constant}$$

In this way, the following distance determination unit 34 can detect that the rear end part (target object 1) is not detected because the vehicle gets too close. Note that the constant is set, for example, several dozen cm to 1 m.

Note that, a predetermined distance may be used as the right-hand side of this determination. The predetermined distance can be defined experimentally because it can be set as a distance at which the preceding vehicle can be usually recognized within the irradiation range (especially, in the vertical direction) of the radar device 11 (for example, 1 to 2 m).

If the following distance determination unit 34 determines that traveling can be made while following by using "dist2 - offset", an inter-vehicle distance correction unit 35 corrects the inter-vehicle distance to the preceding vehicle used for inter-vehicle distance control as follows.

$$(\text{inter-vehicle distance}) = \text{distance} - \text{offset}$$

In the example in FIG. 6(b), the inter-vehicle distance correction unit 35 calculates "inter-vehicle distance = dist2 - offset", and the inter-vehicle distance to the target object 2 is corrected by the amount of the offset. In this way, if a target object having a registered value in the "offset" field becomes the target object having the least distance, the inter-vehicle distance correction unit 35 corrects the distance.

The inter-vehicle distance control unit 36 controls the inter-vehicle distance to be the target inter-vehicle distance by the control method in FIG. 3, which is illustrated as an example. Note that the operational mode to execute the inter-vehicle distance control using "dist2 - offset" is referred to as the "corrected inter-vehicle distance mode". The inter-vehicle distance control apparatus 100 does not directly monitor whether the target object 1 is not detected by the radar device 11. However, the above determination of "dist2 - offset < (dist1 detected last time) - constant" is equivalent to determining that the target object 1 is not detected by the radar device 11. Also, the inter-vehicle distance control apparatus 100 may directly detect that the target object 1 is not detected by the radar device 11. For example, if the inter-vehicle distance control apparatus 100 monitors the distance to the target object 1 and the target object information of the target object 1 stops coming from the inter-vehicle control ECU 12 within the predetermined distance, the inter-vehicle distance control apparatus 100 can detect that the target object 1 is not detected by the radar device 11 because the vehicle gets too close.

Next, when the preceding vehicle increases the speed (or restart traveling), based on "dist2 - offset", the radar device 11 of the vehicle traveling while following the target object 2 detects the rear end part of the car carrier again. This makes the target object information in the target object information DB 40 as illustrated in FIG. 8(c). The target object 3 is the same target object as the target object 1 in FIG. 8(a).

In this case, since the preceding vehicle identification unit 33 identifies a target object having the shortest distance to as the preceding vehicle, the target object 3 is identified as the preceding vehicle. The distance to the target object 3, or dist1, is virtually equivalent to "dist2 - offset" as illustrated in FIG. 6. Therefore, if the target object identified by the preceding vehicle identification unit 33 as the preceding vehicle is switched back from the target object 2 to the target object 3 (= target object 1), the distance used to travel while following by the inter-vehicle distance control apparatus 100 hardly changes, which prevents a passenger from feeling an acceleration or deceleration shock.

[Operational steps]

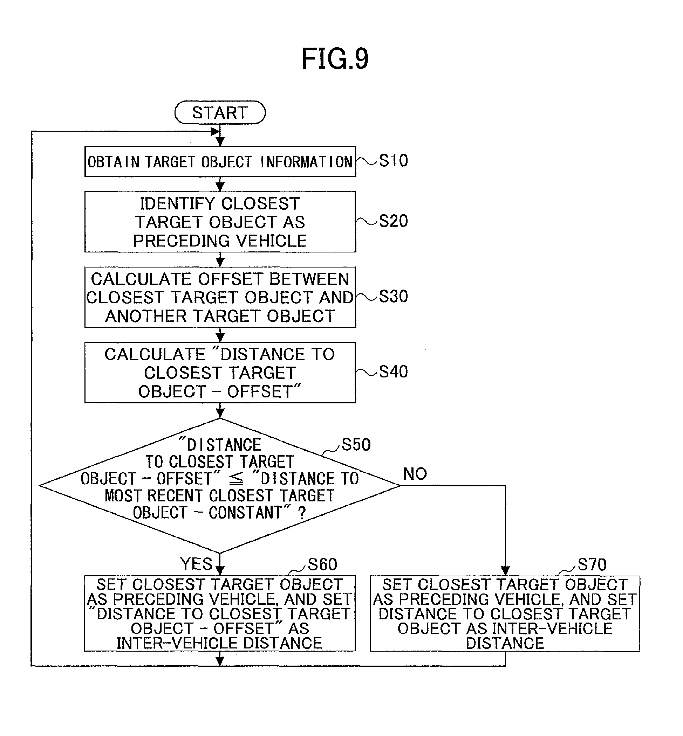

FIG. 9 is an example of a flowchart illustrating steps of the inter-vehicle control executed by the inter-vehicle control ECU 12. The target object information obtainment unit 31 obtains the target object information from the radar device 11 (Step S10). The target object information recording section 32 stores the target object information in the target object information DB 40.

The preceding vehicle identification unit 33 identifies a target object having the least distance as the preceding vehicle (Step S20).

Next, the target object information recording section 32 calculates an offset between the target object having the least distance identified by the preceding vehicle identification unit 33 and the other target object (Step S30). This makes the offset registered for the target object other than the target object having the least distance.

Next, the following distance determination unit 34 subtracts the offset from the distance to the target object having the least distance (Step S40). Note that if the rear end part is the target object having the least distance, the offset does not have a registered value, and the distance to the rear end part is obtained by the calculation at Step S40.

Then, the following distance determination unit 34 determines whether "distance to the target object having the least distance - offset" is less than "the distance to the target object that has most recently existed at the shortest distance-constant" (Step S50).

If the condition at Step S50 is satisfied, the inter-vehicle distance correction unit 35 calculates "distance to the target object having the least distance - offset", and the inter-vehicle distance control unit 36 sets this as the inter-vehicle distance to the control target, and executes the inter-vehicle distance control (Step S60). In this way, the inter-vehicle distance control can be executed without getting too close to the rear end part that cannot be detected by the radar.

If the condition at Step S50 is not satisfied, the inter-vehicle distance control unit 36 sets a target object having the least distance as the preceding vehicle, and sets the distance to the target object having the least distance as the inter-vehicle distance to execute inter-vehicle distance control (Step S70). In this case, the offset of the target object having the least distance may not have a registered value (zero), and the vehicle is not so close to the preceding vehicle. Therefore, traveling is continued while following the detected rear end part.

As described above, the inter-vehicle distance control apparatus 100 in the present embodiment records the offset between the rear end part and the other target object beforehand, and if the rear end part goes out of detection, executes inter-vehicle control based on the distance calculated using the offset. In this way, the vehicle can be prevented from getting too close to the preceding vehicle.

[Second embodiment]

In a second embodiment, an inter-vehicle distance control apparatus 100 will be described that can collect target object information of the same target.

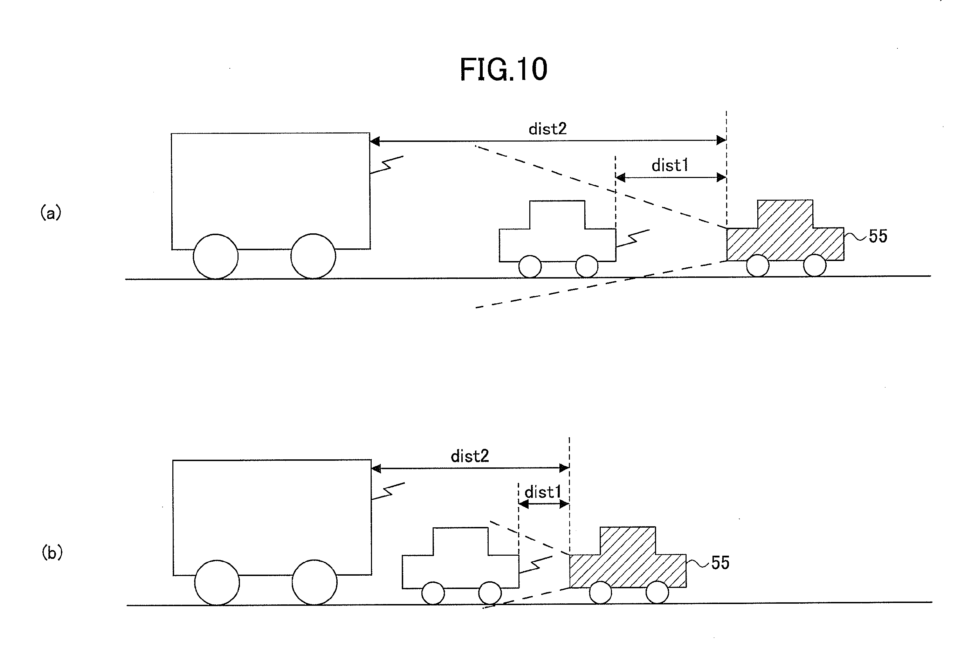

FIG. 10 is an example of diagrams illustrating general features of the inter-vehicle distance control apparatus 100 according to the present embodiment. In FIG. 10, a passenger car (preceding vehicle) and a large vehicle (vehicle ahead of the preceding vehicle) are traveling in front of the vehicle. In this case, the radar device 11 receives reflected waves not only from the passenger car but also from the large vehicle, and obtains multiple pieces of target object information of the rear end parts of different targets as target objects. In FIG. 10(a), although the vehicle ahead of the preceding vehicle is assumed to be a large vehicle, a similar situation may arise when the vehicle ahead of the preceding vehicle is a passenger car, and the preceding vehicle is shifted toward a side end of the lane.

For the case illustrated in the figure, although the radar device 11 can detect the preceding vehicle even if the inter-vehicle distance to the preceding vehicle becomes shorter due to traffic congestion or the like, the offset does not need to be recorded in the first place because the targets are not the same. Also, when getting closer, and the preceding vehicle is not detected, a recorded offset may cause to set the vehicle ahead of the preceding vehicle, which is not the same target, as the target of the inter-vehicle distance control. And this is not preferable.

Thereupon, the inter-vehicle distance control apparatus 100 in the present embodiment determines whether multiple target objects are of the same target by using a fact that the inter-vehicle distance between the preceding vehicle and the vehicle ahead of the preceding vehicle tends to vary. If they are of the same target, the inter-vehicle distance control apparatus 100 registers the offset.

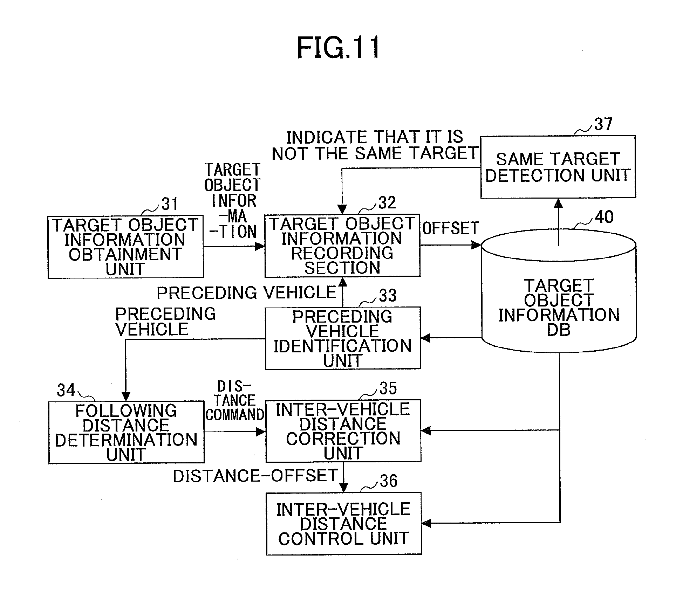

FIG. 11 is an example of a functional block diagram of the inter-vehicle control ECU 100 according to the present embodiment. In the present embodiment, elements having the same codes as in FIG. 5 have substantially the same functions, respectively, and main elements in the present embodiment may be mainly described. The inter-vehicle distance control apparatus 100 in the present embodiment includes a same target detection unit 37. The same target detection unit 37 determines that target objects satisfying the following condition are of the same target.

* Record the difference between the distance to the target object having the least distance and the distance to the target object of interest, and determine if a state continues for a certain time where variation of the difference is contained within a threshold (for example, 50 cm).

And if the offset is virtually constant considering the error difference, then the two target objects can be determined as the same target. In FIG. 10, as the preceding vehicle and the vehicle ahead of the preceding vehicle travel independently, it is hardly likely to happen that the variation width of the difference between dist2 and dist1 is contained within a threshold for a certain time.

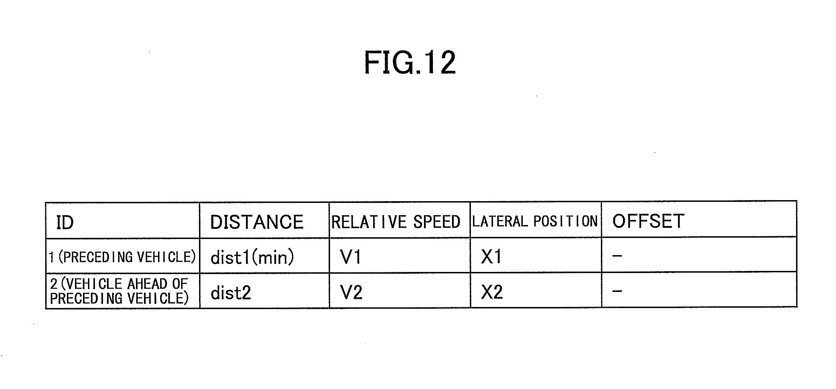

FIG. 12 illustrates the target object information recorded in the target object information DB 40 according to the present embodiment. The target object information is registered where the preceding vehicle is set as the target object 1, and the vehicle ahead of the preceding vehicle is set as the target object 2. The same target detection unit 37 calculates the difference between dist1 of the target object 1 having the shortest distance, and dist2 of the other target object 2, and determines whether a state continues where the variation of the difference is contained within the threshold for a certain time. If this state does not continue, the same target detection unit 37 indicates that the target object 2 and the target object 1 are not of the same target, to the target object information recording section 32. The target object information recording section 32 does not register the "offset" of the target object 2, deletes the "offset", or prevents recording the "offset". Note that an invalid value may be registered instead of simply not recording the "offset". Namely, the target object of interest just needs to be recognized as not a part of the same target with respect to the target object having the least distance 1.

Note that although a vehicle having the long length such as a car carrier often reflects a radar wave at reflecting parts other than the rear end part and the cabin, such a part is unstable in terms of whether to reflect the wave. The offset of such a reflecting part other than the rear end part and the cabin is not registered because the distance (difference) to the rear end part does not continue for a certain time with a certain value.

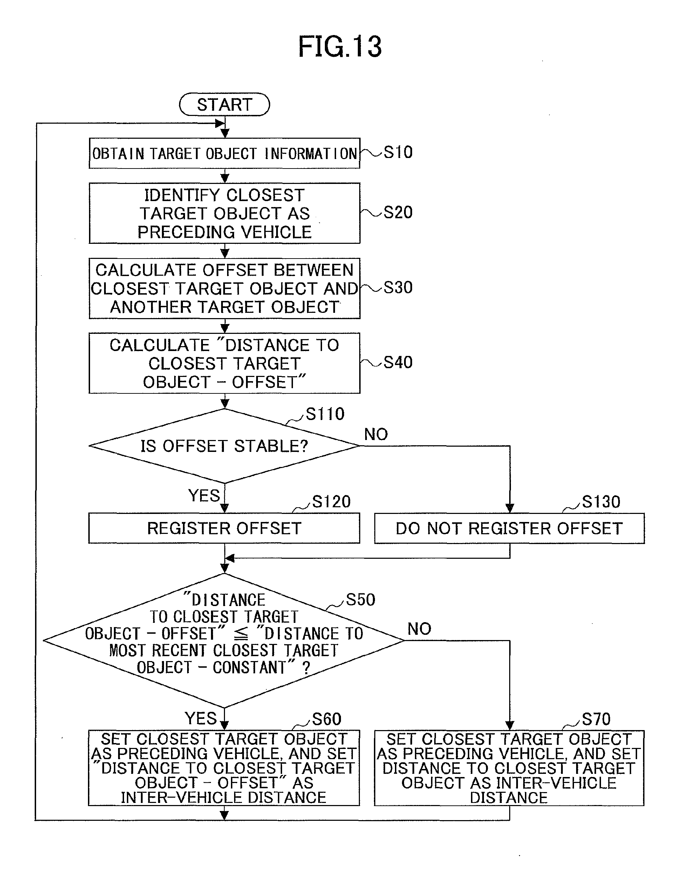

Therefore, according to the present embodiment, when the vehicle gets close so that the rear end part cannot be detected, traveling while following can be suppressed that is based on the distance to a part unstable in terms of whether to reflect the wave. FIG. 13 is an example of a flowchart illustrating steps of the inter-vehicle control executed by the inter-vehicle control ECU 12. Steps S10 to S30 are the same as in the first embodiment.

After calculating the offset, the same target detection unit 37 determines whether the offset is stable (Step S110). Namely, the same target detection unit 37 determines whether a state continues for a certain time where variation of the difference between the distance to the target object having the least distance and the distance to the target object of interest is contained within the threshold.

If the offset is stable (YES at Step S110), the target object information recording section 32 registers the offset (Step S120), or if the offset is not stable (NO at Step S110), the target object information recording section 32 does not register the offset (Step S130).

The rest of the process is the same as in the first embodiment. Namely, the following distance determination unit 34 determines whether "distance to the target object having the least distance - offset" is less than "the distance to the target object that has most recently existed at the shortest distance - constant" (Step S50). In the example in FIG. 10, even if the inter-vehicle distance becomes shorter due to traffic congestion or the like, the state where the preceding vehicle is detected may continue. The preceding vehicle does not have the offset registered, which results in "dist1- offset - dist1".

Therefore, in the example in FIG. 10, the determination at Step S50 is likely to be NO, and the following distance determination unit 34 determines dist1 to the preceding vehicle as the inter-vehicle distance, with which the inter-vehicle distance control unit 36 executes the inter-vehicle distance control (Step S70). Therefore, it is possible to execute the inter-vehicle distance control with respect to the preceding vehicle.

If the preceding vehicle is a vehicle like a car carrier, the determination is YES at Step S50 as in the first embodiment, it is possible to execute the inter-vehicle distance control without getting too close to the rear end part that cannot be detected by the radar.

In addition to the effects of the first embodiment, the inter-vehicle distance control apparatus in the present embodiment can identify the same target with higher precision by verifying whether multiple target objects are of the same target.

[Third embodiment]

The inter-vehicle distance control apparatus described in the first embodiment can travel while following a preceding vehicle such as a car carrier, by having the cabin 51 as the target object and offsetting the distance. However, since the cabin 51 has a longer distance than the rear end part when viewed from the radar device 11, its detection may be unstable compared to the rear end part. In this case, the following inconvenience may arise.

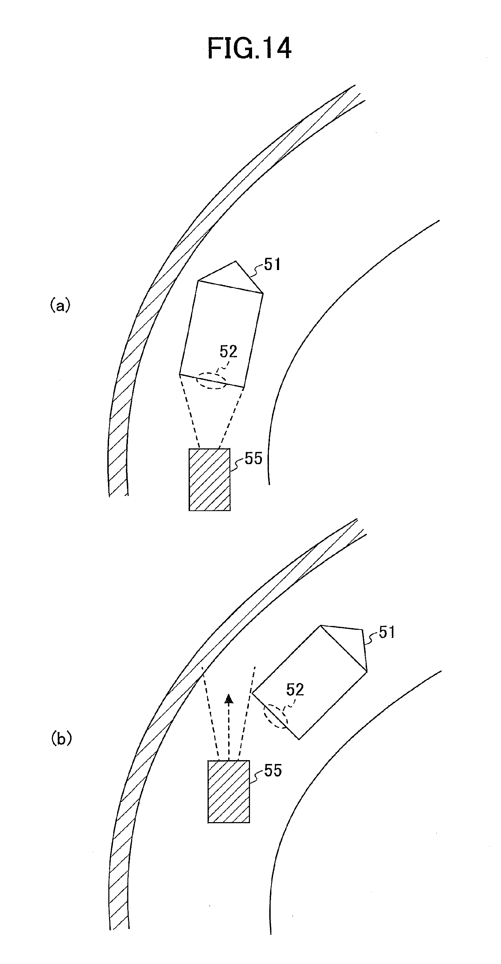

FIG. 14 is an example of diagrams illustrating inconvenience of traveling while following the cabin 51 as the target object. As illustrated in FIG. 14(a), the road curves to the right ahead, the preceding vehicle, which will be described as a car carrier although it is not necessarily a car carrier, gradually turns rightward while traveling. The inter-vehicle distance control apparatus 100 controls to travel while following the rear end part of the car carrier as the target object. In this case, while the car carrier and the vehicle are turning and traveling, the radar device 11 may detect the wall, and in rare cases, the rear end part captured by the inter-vehicle distance control apparatus 100 is switched to the wall (FIG. 14(b)). The wall remains still, and the vehicle continues to stop after the car carrier goes away.

Such inconvenience is more likely to happen with the corrected inter-vehicle distance mode where the inter-vehicle control is executed based on a value obtained by subtracting the offset from the distance to the cabin 51 as in the first or second embodiment. This is because detection of the cabin 51 is unstable. Thereupon, the inter-vehicle distance control apparatus 100 in the present embodiment controls to travel while following as follows. Namely, the inter-vehicle distance control apparatus 100 prevents correcting the inter-vehicle distance by the corrected inter-vehicle distance mode when the lateral position of the target object having the least distance is shifted from the center by a threshold or greater. This can avoid transitioning to the inter-vehicle distance correction mode while turning around a curve while traveling, so that erroneous detection of a wall as a preceding vehicle can be suppressed.

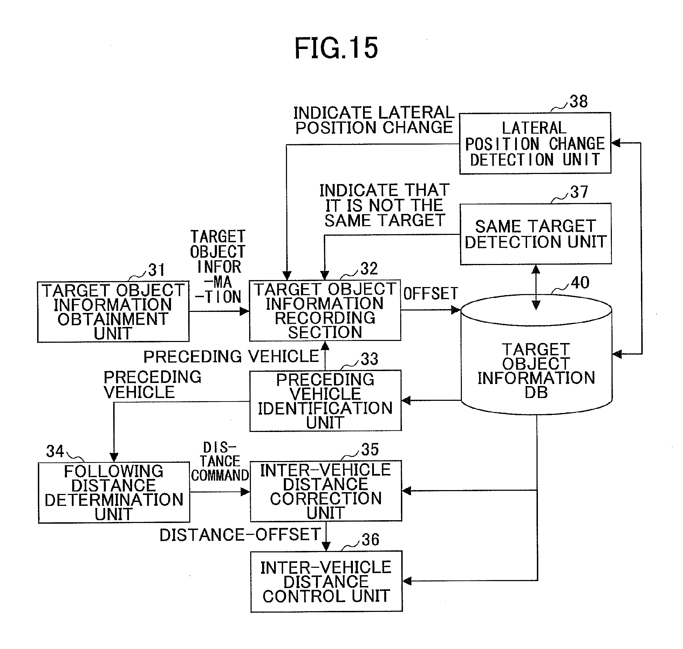

FIG. 15 is an example of a functional block diagram of an inter-vehicle control ECU according to the present embodiment. Compared to the second embodiment, it includes a lateral position change detection unit 38. When the lateral position of the target object having the least distance changes by a threshold or greater, the lateral position change detection unit 38 indicates that the lateral position changes by the threshold or greater to the target object information recording section 32. The target object information recording section 32 does not register the "offset" of the target object 2, deletes the "offset", or prevents recording the "offset".

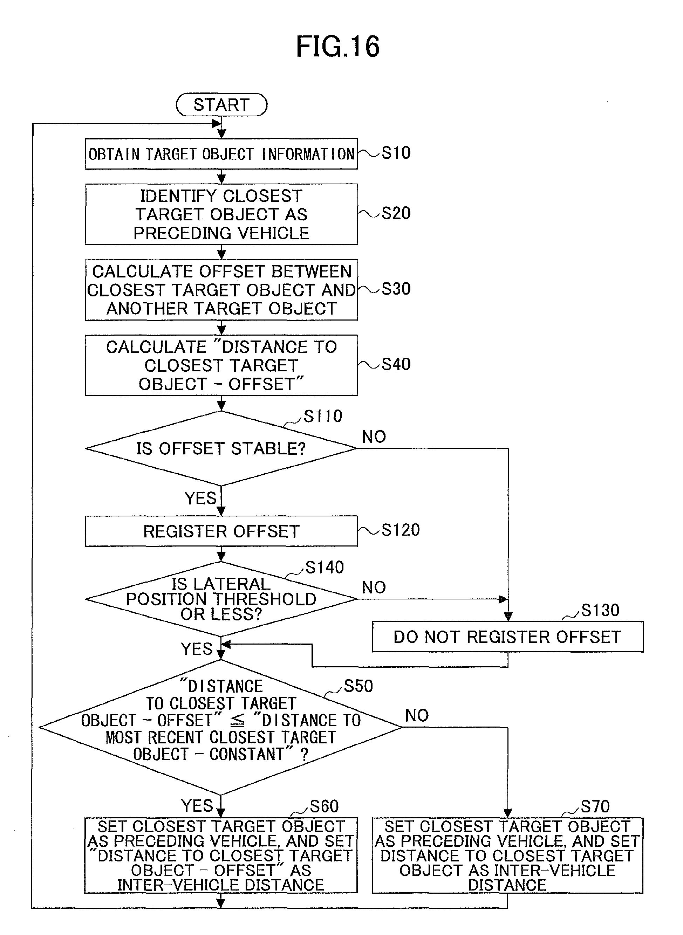

FIG. 16 is an example of a flowchart illustrating steps of the inter-vehicle control executed by the inter-vehicle control ECU 12. In FIG. 16, after having the offset registered at Step S120, the lateral position change detection unit 38 determines whether the lateral position is the threshold or less (Step S140). Then, if the lateral position is the threshold or less (NO at Step S140), the offset is not registered (Step S130). Since the offset has already been registered, it is deleted in this case. The inter-vehicle distance correction mode can be avoided because the offset is not registered.

In addition to the effects of the first and second embodiments, by determining the lateral position, the inter-vehicle distance control apparatus in the present embodiment can avoid the inter-vehicle distance correction mode in a traveling state where it is difficult to detect the preceding vehicle.

[Fourth embodiment]

The inter-vehicle distance control apparatus described in the first embodiment can travel while following a preceding vehicle such as a car carrier, by having the cabin 51 as the target object and offsetting the distance. However, since the cabin 51 has a longer distance than the rear end part when viewed from the radar device 11, its detection may be unstable compared to the rear end part. Therefore, for example, the distance and relative speed may fluctuate to a certain extent, and if the inter-vehicle distance control apparatus 100 controls the inter-vehicle distance based on the distance and relative speed to this cabin 51 similarly to a target object such as the rear end part, acceleration may not be stable, and a shock of acceleration/deceleration may be likely to be felt.

Thereupon, the inter-vehicle distance control apparatus in the present embodiment 100 controls acceleration as follows.

(i) In a low speed range,
(ii) In case of the inter-vehicle distance correction mode,
(iii) Set the acceleration gradient limit less.

By setting the acceleration gradient limit less, even if the car carrier (cabin) seems to steeply decelerate, the acceleration command value of the inter-vehicle distance control apparatus 100 only changes within the range of the acceleration gradient limit, and steep acceleration/deceleration can be reduced. Also, by having the conditions (i) and (ii), acceleration can be restricted only when traveling while following by offsetting the distance in a state where the radar cannot detect the rear end part. Therefore, when the preceding vehicle steeply decelerates in a high speed range, delayed deceleration of the vehicle will not take place.

Note that, even in a state where (i) to (iii) are satisfied, the inter-vehicle distance control apparatus 100 sets the acceleration gradient limit so that the vehicle decelerates before contacting the rear end part, and no inconvenience arises.

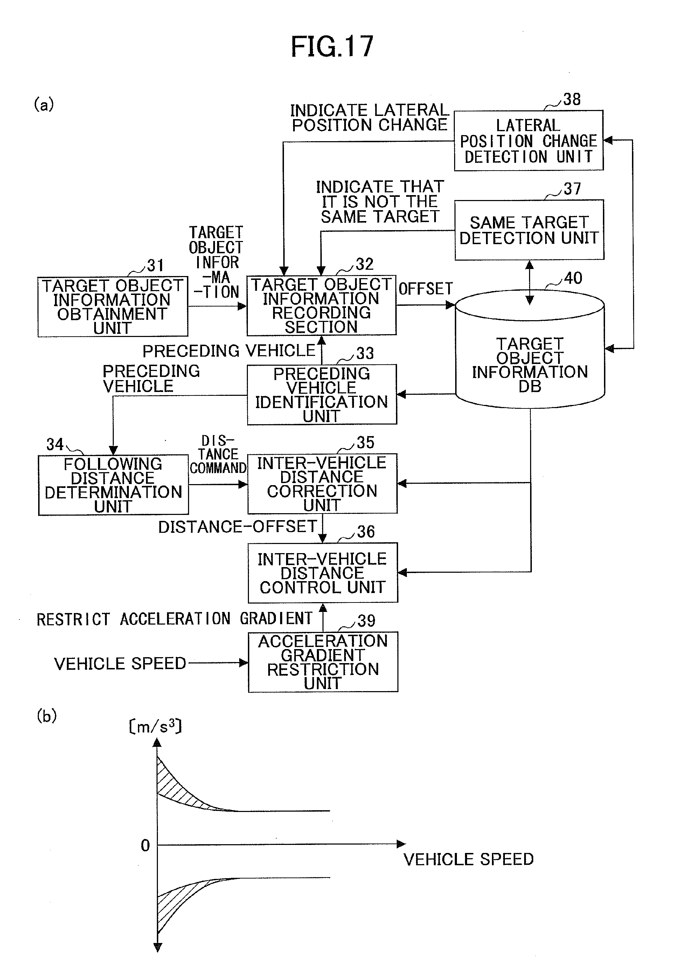

FIG. 17 (a) is an example of a functional block diagram of the inter-vehicle control ECU 100 according to a fourth embodiment. Compared to the third embodiment, it includes an acceleration gradient restriction unit 39. When obtaining an indication from the inter-vehicle distance control unit 36 that it is in the corrected inter-vehicle distance mode, if the vehicle speed is less than or equal to a predetermined value, the acceleration gradient restriction unit 39 sets the acceleration gradient limit less than that used when not in the corrected inter-vehicle distance mode.

FIG. 17 (b) is an example of a schematic view of the acceleration gradient limit. Shaded parts illustrate differences between the acceleration gradient limits in the corrected inter-vehicle distance mode and not in corrected inter-vehicle distance mode. In this way, by making the absolute value of the acceleration gradient limit less, a shock of acceleration/deceleration in the corrected inter-vehicle distance mode can be reduced.

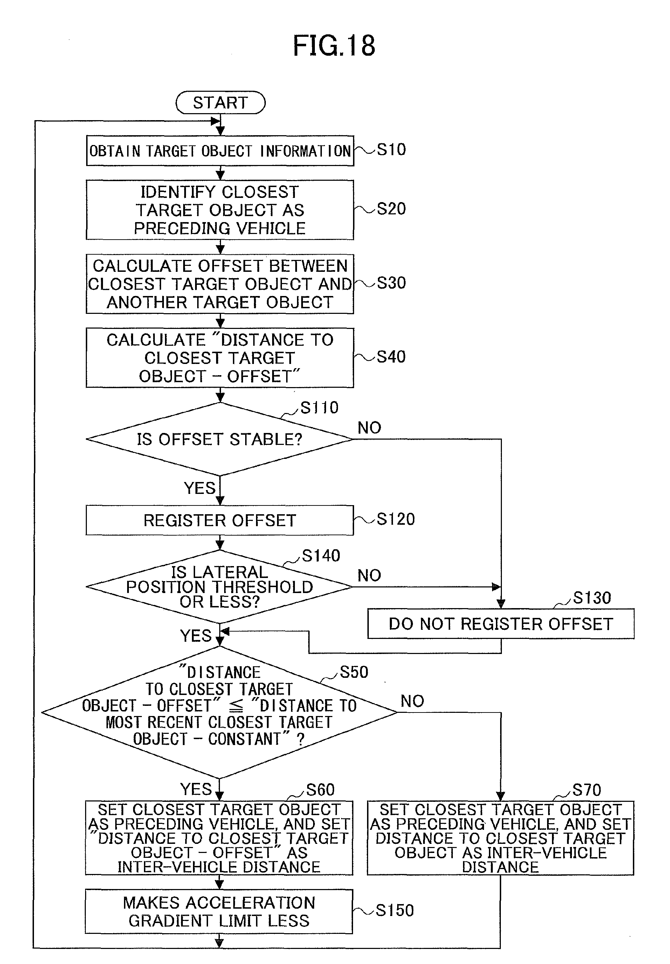

FIG. 18 is an example of a flowchart illustrating steps of the inter-vehicle control executed by the inter-vehicle control ECU 12. In FIG. 18, after "distance to the target object having the least distance - offset" is determined as the inter-vehicle distance at Step S60, when the inter-vehicle distance control unit 36 controls the inter-vehicle distance, the acceleration gradient restriction unit 39 makes the acceleration gradient limit less (Step S150).

In addition to the effects of the first to third embodiments, the inter-vehicle distance control apparatus in the present embodiment can reduce a shock of acceleration/deceleration by making the acceleration gradient limit less in the inter-vehicle distance correction mode.

As above, although a control method of an inter-vehicle distance is described with embodiments, the present invention is not limited to the above embodiments, but various modifications and improvements can be made within the scope of the present invention.

**Claims**

1. An inter-vehicle distance control apparatus configured to detect a preceding vehicle in front of a vehicle having the inter-vehicle distance control apparatus installed, and to control an inter-vehicle distance between the preceding vehicle and the vehicle, comprising:

   a distance obtainment unit configured to set one or more reflecting parts of the preceding vehicle as target objects, and to obtain distances between the respective target objects and the vehicle;
   a target object identification unit configured to identify a least-distant target object having a least distance among the distances;
   a difference value recording unit configured to record a difference between the distance to the least-distant target object identified by the target object identification unit, and the distance to each of the other target objects; and
   a distance correction unit configured to correct the distance between a currently least-distant target object and the vehicle, by subtracting the difference recorded in a past for the least-distant target object, from the distance of the currently least-distant target object, when getting close within a predetermined distance to the least-distant target identified as having the least distance by the target object identification unit, before the target object identification unit identifies the currently least-distant target object.

2. The inter-vehicle distance control apparatus as claimed in claim 1, wherein when the distance to the least-distant target object that has been identified by the target object identification unit until just before is not obtained by the distance obtainment unit, the distance correction unit corrects the distance between the least-distant target object and the vehicle, by subtracting the difference recorded in the past for the currently least-distant target object from the distance to the currently least-distant target object.

3. The inter-vehicle distance control apparatus as claimed in claim 1, wherein the distance obtainment unit obtains the distances between the respective target objects and the vehicle by a distance detection device detecting the distances by transmitting a radio wave in front of the vehicle and receiving reflected waves from the reflecting parts,
   wherein when a distance between a rear end part of the preceding vehicle and the vehicle becomes less so that the rear end part of the preceding vehicle goes out of a transmission range of the radio wave transmitted by the distance detection device, the target object identification unit identifies one of the reflecting parts other than the rear end part of the preceding vehicle as the currently least-distant target object,
   wherein the distance correction unit corrects the distance between the target object corresponding to the reflecting part other than the rear end part of the preceding vehicle, and the vehicle, by subtracting the difference recorded in the past for the target object corresponding to the reflecting part other than the rear end part of the preceding vehicle, from the currently least-distant target object.

4. The inter-vehicle distance control apparatus as claimed in any one of claims 1 to 3, further comprising:

   an inter-vehicle distance control unit configured to control a driving force and a braking force, within a range not exceeding a predetermined acceleration gradient limit, so that the inter-vehicle distance between the preceding vehicle and the vehicle corrected by the distance correction unit is maintained as a target inter-vehicle distance; and
   an acceleration gradient restriction unit configured to change the acceleration gradient limit to a lower value when the inter-vehicle distance control unit controls the inter-vehicle distance in a state where the distance between the least-distant target object and the vehicle is corrected by the distance correction unit.

5. The inter-vehicle distance control apparatus as claimed in claim 1, further comprising:

   a variation width monitor unit configured to detect whether a variation width of the difference recorded by the difference value recording unit is within a threshold for a predetermined time;

wherein when the variation width of the difference is not within the threshold for the predetermined time, the difference value recording unit deletes or does not record the difference between the distance to the least-distant target object identified by the target object identification unit and the distance to a corresponding target object.

6. The inter-vehicle distance control apparatus as claimed in claim 1, wherein the distance obtainment unit obtains a relative lateral position of each of the target objects in a vehicle width direction of the vehicle,

wherein when the relative lateral position is greater than or equal to a threshold, the difference value recording unit deletes or does not record the difference between the distance to the least-distant target object identified by the target object identification unit and the distance to a corresponding target object.

# FIG.1

(a)

(b)

(c)

CORRECTED POSITION OF CABIN
(DISTANCE TO CABIN)

# FIG.2

EP 2 894 072 A1

FIG.3

TARGET
INTER-VEHICLE
DISTANCE
(LONG/MIDDLE/SHORT) → DIVIDER (21) → RELATIVE SPEED → K1 (27)

VEHICLE SPEED V

TARGET
INTER-
VEHICLE
TIME

INTER-VEHICLE
DISTANCE → DIVIDER (22) → INTER-
VEHICLE
TIME

(23) + / −

K2

(24) − / +

TARGET
ACCELERA-
TION

(25) + / −

ACCELERATION

ACCELERATION
CONTROL
UNIT (26) → ACCELERATION
COMMAND
VALUE

17

# FIG.4

(a)

(b)

# FIG.5

TARGET
OBJECT
INFOR
-MA
-TION

31
TARGET OBJECT
INFORMATION
OBTAINMENT
UNIT

32
TARGET OBJECT
INFORMATION
RECORDING
SECTION

OFFSET

40
TARGET
OBJECT
INFORMATION
DB

PRECEDING VEHICLE

33
PRECEDING
VEHICLE
IDENTIFICATION
UNIT

PRECEDING
VEHICLE

34
FOLLOWING
DISTANCE
DETERMINATION
UNIT

DIS-
TANCE
COMMAND

35
INTER-VEHICLE
DISTANCE
CORRECTION
UNIT

DISTANCE-OFFSET

36
INTER-VEHICLE
DISTANCE
CONTROL UNIT

# FIG.6

(a)

TARGET OBJECT POSITION TO BE CONFIRMED ORIGINALLY

dist2

OFFSET

dist1

51

52

55

(b)

CONTROL THIS DISTANCE AS INTER-VEHICLE DISTANCE TO PRECEDING VEHICLE

dist2

OFFSET

51

52

55

dist2 − OFFSET

EP 2 894 072 A1

# FIG.7

# FIG.8

(a)

| ID | DISTANCE | RELATIVE SPEED | LATERAL POSITION | OFFSET |
|---|---|---|---|---|
| 1(REAR END PART) | dist1(min) | V1 | X1 | − |
| 2(CABIN) | dist2 | V2 | X2 | dist2 − dist1 |

(b)

| ID | DISTANCE | RELATIVE SPEED | LATERAL POSITION | OFFSET |
|---|---|---|---|---|
| 2(CABIN) | dist2 | V2 | X2 | dist2 − dist1 |

(c)

| ID | DISTANCE | RELATIVE SPEED | LATERAL POSITION | OFFSET |
|---|---|---|---|---|
| 2(CABIN) | dist2 | V2 | X2 | dist2 − dist1 |
| 3(REAR END PART) | dist1(min) | V1 | X1 | − |

EP 2 894 072 A1

# FIG.9

```
                    ( START )
                        │
                        ▼
    ┌──────────────────────────────────────┐
    │ OBTAIN TARGET OBJECT INFORMATION │ ～S10
    └──────────────────────────────────────┘
                        │
                        ▼
    ┌──────────────────────────────┐
    │       IDENTIFY CLOSEST        │
    │      TARGET OBJECT AS         │ ～S20
    │      PRECEDING VEHICLE        │
    └──────────────────────────────┘
                        │
                        ▼
    ┌──────────────────────────────┐
    │  CALCULATE OFFSET BETWEEN     │
    │ CLOSEST TARGET OBJECT AND     │ ～S30
    │    ANOTHER TARGET OBJECT      │
    └──────────────────────────────┘
                        │
                        ▼
    ┌──────────────────────────────┐
    │  CALCULATE "DISTANCE TO       │
    │     CLOSEST TARGET            │ ～S40
    │    OBJECT − OFFSET"           │
    └──────────────────────────────┘
                        │
                        ▼
```

"DISTANCE TO CLOSEST TARGET OBJECT − OFFSET" ≦ "DISTANCE TO MOST RECENT CLOSEST TARGET OBJECT − CONSTANT" ? — S50

NO

YES — S60

| SET CLOSEST TARGET OBJECT AS PRECEDING VEHICLE, AND SET "DISTANCE TO CLOSEST TARGET OBJECT − OFFSET" AS INTER-VEHICLE DISTANCE |

— S70

| SET CLOSEST TARGET OBJECT AS PRECEDING VEHICLE, AND SET DISTANCE TO CLOSEST TARGET OBJECT AS INTER-VEHICLE DISTANCE |

# FIG.10

(a)

dist2

dist1

55

(b)

dist2

dist1

55

# FIG.11

INDICATE THAT IT IS
NOT THE SAME TARGET

SAME TARGET
DETECTION UNIT ~37

TARGET
OBJECT
INFOR
-MA
-TION

TARGET OBJECT
INFORMATION
OBTAINMENT
UNIT ~31

TARGET OBJECT
INFORMATION
RECORDING
SECTION ~32

OFFSET

~40
TARGET
OBJECT
INFORMATION
DB

PRECEDING VEHICLE

PRECEDING
VEHICLE

PRECEDING
VEHICLE
IDENTIFICATION
UNIT ~33

34~
FOLLOWING
DISTANCE
DETERMINATION
UNIT

DIS-
TANCE
COMMAND

INTER-VEHICLE
DISTANCE
CORRECTION
UNIT ~35

DISTANCE-OFFSET

INTER-VEHICLE
DISTANCE
CONTROL UNIT ~36

# FIG.12

| ID | DISTANCE | RELATIVE SPEED | LATERAL POSITION | OFFSET |
|---|---|---|---|---|
| 1 (PRECEDING VEHICLE) | dist1(min) | V1 | X1 | − |
| 2 (VEHICLE AHEAD OF PRECEDING VEHICLE) | dist2 | V2 | X2 | − |

EP 2 894 072 A1

# FIG.13

```
                    ( START )
                       │
                       ▼
        ┌──────────────────────────────┐
        │ OBTAIN TARGET OBJECT INFORMATION │──S10
        └──────────────────────────────┘
                       │
                       ▼
        ┌──────────────────────┐
        │   IDENTIFY CLOSEST    │
        │   TARGET OBJECT AS    │──S20
        │   PRECEDING VEHICLE   │
        └──────────────────────┘
                       │
                       ▼
        ┌──────────────────────────────┐
        │ CALCULATE OFFSET BETWEEN      │
        │ CLOSEST TARGET OBJECT AND     │──S30
        │ ANOTHER TARGET OBJECT         │
        └──────────────────────────────┘
                       │
                       ▼
        ┌──────────────────────┐
        │ CALCULATE "DISTANCE TO│
        │    CLOSEST TARGET     │──S40
        │  OBJECT – OFFSET"     │
        └──────────────────────┘
                       │
                       ▼
                                    S110
              ◇─────────────────────◇          NO
               IS OFFSET STABLE?  ──────────────────────┐
              ◇─────────────────────◇                   │
                       │ YES                             │
                       │        S120                     │         S130
        ┌──────────────────────┐          ┌──────────────────────────┐
        │   REGISTER OFFSET     │          │   DO NOT REGISTER OFFSET  │
        └──────────────────────┘          └──────────────────────────┘
                       │                              │
                       ▼◄─────────────────────────────┘
                "DISTANCE              S50
              ◇ TO CLOSEST TARGET ◇
        OBJECT – OFFSET" ≦ "DISTANCE TO          NO
           MOST RECENT CLOSEST TARGET ──────────────────┐
              OBJECT – CONSTANT" ?                       │
              ◇───────────────────◇                      │
                       │ YES    S60                       │        S70
        ┌──────────────────────────┐    ┌──────────────────────────┐
        │ SET CLOSEST TARGET OBJECT │    │ SET CLOSEST TARGET OBJECT │
        │ AS PRECEDING VEHICLE, AND SET │ │ AS PRECEDING VEHICLE, AND SET│
        │ "DISTANCE TO CLOSEST TARGET│    │ DISTANCE TO CLOSEST TARGET │
        │   OBJECT – OFFSET" AS      │    │  OBJECT AS INTER-VEHICLE   │
        │ INTER-VEHICLE DISTANCE     │    │       DISTANCE             │
        └──────────────────────────┘    └──────────────────────────┘
                       │
                       ▼
```

# FIG.14

(a)

51

52

55

(b)

51

52

55

# FIG.15

INDICATE LATERAL
POSITION CHANGE

```
                                              ┌─────────────────┐ 38
                                              │ LATERAL         │
                                              │ POSITION CHANGE │◄──
                                              │ DETECTION UNIT  │
                                              └─────────────────┘
                INDICATE THAT
                IT IS NOT THE       ┌──────────────────┐ 37
                SAME TARGET         │ SAME TARGET      │
                                    │ DETECTION UNIT   │
        TARGET                      └──────────────────┘
        OBJECT
        INFOR                                    40
  31    -MA      ┌──────────────┐ 32          ┌──────────────┐
┌──────────────┐ -TION │ TARGET OBJECT │ OFFSET │              │
│ TARGET OBJECT│      │ INFORMATION  │────────│  TARGET      │
│ INFORMATION  │─────►│ RECORDING    │        │  OBJECT      │
│ OBTAINMENT   │      │ SECTION      │        │  INFORMATION │
│ UNIT         │      └──────────────┘        │  DB          │
└──────────────┘                              │              │
```

PRECEDING VEHICLE

PRECEDING
VEHICLE

PRECEDING
VEHICLE
IDENTIFICATION
UNIT  33

DIS-
TANCE
COMMAND

34
FOLLOWING
DISTANCE
DETERMINATION
UNIT

35
INTER-VEHICLE
DISTANCE
CORRECTION
UNIT

DISTANCE-OFFSET  36

INTER-VEHICLE
DISTANCE
CONTROL UNIT

# FIG.16

```
                    ┌─────────┐
                    │  START  │
                    └────┬────┘
                         ▼
       ┌──────────────────────────────────┐
       │ OBTAIN TARGET OBJECT INFORMATION │ ～S10
       └──────────────┬───────────────────┘
                      ▼
       ┌──────────────────────────┐
       │     IDENTIFY CLOSEST      │
       │     TARGET OBJECT AS      │ ～S20
       │    PRECEDING VEHICLE      │
       └──────────────┬───────────┘
                      ▼
       ┌──────────────────────────────┐
       │   CALCULATE OFFSET BETWEEN    │
       │ CLOSEST TARGET OBJECT AND     │ ～S30
       │    ANOTHER TARGET OBJECT      │
       └──────────────┬───────────────┘
                      ▼
       ┌──────────────────────────┐
       │   CALCULATE "DISTANCE TO  │
       │    CLOSEST TARGET         │ ～S40
       │    OBJECT - OFFSET"       │
       └──────────────┬───────────┘
```

S110

IS OFFSET STABLE? ──NO──▶

YES

REGISTER OFFSET ～S120

S140

IS LATERAL POSITION THRESHOLD OR LESS? ──NO──▶

S130

DO NOT REGISTER OFFSET

YES

S50

"DISTANCE TO CLOSEST TARGET OBJECT - OFFSET" ≦ "DISTANCE TO MOST RECENT CLOSEST TARGET OBJECT - CONSTANT" ? ──NO──▶

YES ～S60

SET CLOSEST TARGET OBJECT AS PRECEDING VEHICLE, AND SET "DISTANCE TO CLOSEST TARGET OBJECT - OFFSET" AS INTER-VEHICLE DISTANCE

～S70

SET CLOSEST TARGET OBJECT AS PRECEDING VEHICLE, AND SET DISTANCE TO CLOSEST TARGET OBJECT AS INTER-VEHICLE DISTANCE

# FIG.17

(a)

INDICATE LATERAL
POSITION CHANGE
38
LATERAL
POSITION CHANGE
DETECTION UNIT

INDICATE THAT
IT IS NOT THE
SAME TARGET
37
SAME TARGET
DETECTION UNIT

TARGET
OBJECT
INFOR
-MA
-TION
31
TARGET OBJECT
INFORMATION
OBTAINMENT
UNIT

32
TARGET OBJECT
INFORMATION
RECORDING
SECTION

OFFSET

40
TARGET
OBJECT
INFORMATION
DB

PRECEDING VEHICLE
PRECEDING
VEHICLE

33
PRECEDING
VEHICLE
IDENTIFICATION
UNIT

34
FOLLOWING
DISTANCE
DETERMINATION
UNIT

DIS-
TANCE
COMMAND

35
INTER-VEHICLE
DISTANCE
CORRECTION
UNIT

DISTANCE-OFFSET

36
INTER-VEHICLE
DISTANCE
CONTROL UNIT

RESTRICT ACCELERATION GRADIENT

VEHICLE SPEED

39
ACCELERATION
GRADIENT
RESTRICTION
UNIT

(b)

[m/s³]

0

VEHICLE SPEED

# FIG.18

```
                    ( START )
                         │
                         ▼
        ┌──────────────────────────────────┐
        │ OBTAIN TARGET OBJECT INFORMATION │──S10
        └──────────────────────────────────┘
                         │
                         ▼
        ┌──────────────────────────────────┐
        │        IDENTIFY CLOSEST           │
        │       TARGET OBJECT AS            │──S20
        │       PRECEDING VEHICLE           │
        └──────────────────────────────────┘
                         │
                         ▼
        ┌──────────────────────────────────┐
        │   CALCULATE OFFSET BETWEEN        │
        │ CLOSEST TARGET OBJECT AND         │──S30
        │    ANOTHER TARGET OBJECT          │
        └──────────────────────────────────┘
                         │
                         ▼
        ┌──────────────────────────────────┐
        │    CALCULATE "DISTANCE TO         │
        │       CLOSEST TARGET              │──S40
        │      OBJECT − OFFSET"             │
        └──────────────────────────────────┘
                         │
                         ▼
                    ╱S110
        ◇ IS OFFSET STABLE? ◇────NO────────────────┐
                         │                          │
                        YES                         │
                         ▼                          │
        ┌──────────────────────────────────┐        │
        │        REGISTER OFFSET           │──S120   │
        └──────────────────────────────────┘        │
                         │                          │
                         ▼  ╱S140                    │
        ◇ IS LATERAL POSITION THRESHOLD ◇──NO───────┤
          OR LESS?                                  │
                         │               ╱S130       │
                        YES    ┌─────────────────────────────┐
                         │     │   DO NOT REGISTER OFFSET    │
                         │◄────┤                             │
                         ▼     └─────────────────────────────┘
                    ╱S50
        ◇ "DISTANCE TO CLOSEST TARGET
          OBJECT − OFFSET" ≦ "DISTANCE TO ◇──NO──┐
          MOST RECENT CLOSEST TARGET             │
          OBJECT − CONSTANT" ?                   │
                         │                       │
                        YES  ╱S60                │  ╱S70
                         ▼                       ▼
        ┌──────────────────────────┐  ┌──────────────────────────┐
        │ SET CLOSEST TARGET OBJECT│  │ SET CLOSEST TARGET OBJECT│
        │ AS PRECEDING VEHICLE, AND│  │ AS PRECEDING VEHICLE, AND│
        │ SET "DISTANCE TO CLOSEST │  │ SET DISTANCE TO CLOSEST  │
        │ TARGET OBJECT − OFFSET"  │  │ TARGET OBJECT AS         │
        │ AS INTER−VEHICLE DISTANCE│  │ INTER−VEHICLE DISTANCE   │
        └──────────────────────────┘  └──────────────────────────┘
                         │
                         ▼
        ┌──────────────────────────────────┐
        │     MAKES ACCELERATION           │──S150
        │     GRADIENT LIMIT LESS          │
        └──────────────────────────────────┘
                         │
                         ▼
```

<div align="center">

**INTERNATIONAL SEARCH REPORT**

</div>

| | International application No. |
| --- | --- |
| | PCT/JP2012/072975 |

**A. CLASSIFICATION OF SUBJECT MATTER**
*B60W30/16*(2012.01)i, *B60W40/04*(2006.01)i, *G01S13/93*(2006.01)i, *G01S17/93* (2006.01)i, *G08G1/16*(2006.01)i

According to International Patent Classification (IPC) or to both national classification and IPC

**B. FIELDS SEARCHED**

Minimum documentation searched (classification system followed by classification symbols)
B60W30/16, B60W40/04, G01S13/93, G01S17/93, G08G1/16

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2002-327635 A (Nissan Motor Co., Ltd.), 15 November 2002 (15.11.2002), abstract; claim 1; paragraphs [0077] to [0080]; fig. 1, 6 (Family: none) | 1-6 |
| A | JP 6-176300 A (Nippondenso Co., Ltd.), 24 June 1994 (24.06.1994), paragraphs [0048] to [0053]; fig. 14 & US 5510990 A & DE 4341689 A | 1-6 |
| A | JP 2002-116255 A (Nissan Motor Co., Ltd.), 19 April 2002 (19.04.2002), abstract; paragraphs [0002] to [0004] (Family: none) | 1-6 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 November, 2012 (06.11.12) | 20 November, 2012 (20.11.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002283874 A